# EUROPEAN PATENT APPLICATION

(11) **EP 1 721 720 A1**
(43) Date of publication of application: **15.11.2006**
(21) Application number: 05010158.3
(22) Date of filing: 10.05.2005
(51) Int. Cl.: B29C 44/56

(54) **Method for preparing formed polyurethane foam materials and formed polyurethane foam materials therefrom**

(71) Applicant: Jung-Shun, Ou, Chiayi (TW)
(72) Inventor: Jung-Shun, Ou, Chiayi (TW)
(74) Representative: Winter, Brandl, Fürniss, Hübner Röss, Kaiser, Polte Partnerschaft Patent- und Rechtsanwaltskanzlei

(57) **Abstract**

This invention relates to a novel method for the preparation of polyurethane foam materials suited for seamless breast pads, cups, fronts and the like for use in brassieres and other garments. Polyurethane foam is produced from aliphatic isocyanates and polyols. The aliphatic polyurethane foam is reticulated to remove all celled membranes and sliced into sheet with a thickness greater than the thicker wall of the finished brassiere cup. The sliced aliphatic polyurethane foam sheet is then pressed between mold parts of a female mold part and a male mold part. The mold parts are closed and pressed whereby the aliphatic polyurethane foam material is molded into the exact shape of the mold cavity. The molded aliphatic polyurethane foam material can be used as seamless breast pads, cups, fronts and the like in brassieres and other garments and expresses superior non-yellowing properties over previous aromatic polyurethane brassiere pads and improved breathability and porosity.

## Description

### FIELD OF THE INVENTION

This invention relates to a novel method for the preparation of formed polyurethane foam materials, especially to method for preparation of formed polyurethane foam materials for breast pads, cups, fronts and the like for use in brassieres and other garments, and the breast pads, cups fronts and the like prepared according to the invented method. This method is especially useful in the preparation of a molded seamless brassiere cup from soft polyurethane foam materials that were produced from the polymerization of aliphatic isocyanates and polyols.

### BACKGROUND OF THE INVENTION

In the manufacture of brassieres and other garments that include formed breast pads, cups, fronts and the like, there is a need for resilient materials that can adapt themselves to the various positions and motions of the wearer, while always retaining their original shape. Further, their shape and resilience should not be affected by laundering and machine washing. Still further, brassiere pad requires sufficient porosity and breathability to improve the comfort of the wearer.

Brassiere pads molded from fiberfill material of varying thickness have been used for many years. Prior art processes have suffered from thinning at the apex and consequently resulted in poor shape stability after laundering and machine washing. In order to overcome this thinning problem, sewing on an apex portion has been a common solution. The sewing, however, cannot meet current fashion requirement for a seamless brassiere cup.

An improvement for making brassiere pad is described in U.S. patent No. 4,025,597, issued on May 24, 1977 to Koshi Sawamoto. This invention involves die molding of a resilient fibrous material intermixed with a thermoplastic resin and heating the die molds to a temperature above the softening temperature of the resin. This process, however, requires homogeneous distribution of the thermoplastic resin within the fibrous material and, thus, production of brassiere cups with even softness and resilience using this process is difficult. Another drawback of this invention is the requirement for a precise resin contain. Additional resin results in a stiffer brassiere cup with reduced resilience. A brassiere cup with an insufficient amount of resin binding tends to be affected by laundering and results in poor shape stability.

Another method of fabricating a brassiere cup involves thermal formation of a polyurethane foam material as disclosed by U.S. patent No. 4,250,137, issued on Feb. 10, 1981 to Walter Riedler. A sheet of polyurethane foam peeled from a polyurethane slab stock foam block is placed between mold parts of a heated female mold part and a heated male mold part. Hydraulic pressure is then applied to press the foam sheet with the mold parts. According to the description in the patent, the mold parts are heated to 350 - 450°F. Pressure applied to the polyurethane foam material is approximately 60 pounds per square inch of mold area and heat applied to the polyurethane foam material is approximately 400°F, with heat and pressure being applied simultaneously for approximately sixty seconds. Actual process cycle time depends on the thickness of the polyurethane foam sheet. Owing to the low thermal conductivity of the polyurethane foam material, a thicker foam sheet usually requires an even longer process cycle time, in order to allow sufficient cell strut deformation in the center part of the polyurethane foam material. Such thermal treatment causes dissociation of chemical bond in the polyurethane, which results in loss in physical properties and accelerated yellowing in the service life of the polyurethane foam.

A significant drawback resulted from using aromatic polyurethane foam is its color change nature. It is well known that aromatic polyurethane foam tends to become yellowish while exposed to light, especially ultra-violet light. Kiyotake has invented a method to produce polyurethane foam using aliphatic isocyanates to solve this problem, as disclosed in European Patent Application Publication No. 0,473,107. The invention comprises reacting an isocyanate-terminated prepolymer obtained by the addition of a polyol to an aliphatic isocyanate in the amount of 1.4 to 2.6 times the hydroxyl equivalent, with water in the amount of 0.4 to 5 times in the presence of catalyst. Non-yellowing aliphatic polyurethane foam can be produced from this method. However, the aliphatic polyurethane foam has close cells in most all parts of its structure due to the lack of blowing as result from slow reactivity of the aliphatic isocyanate functional group. Such close cell structure within polyurethane foam requires higher thermal formation temperature and longer process time due to slower thermal dissipation and processing difficulty. Resulted foam brassiere pads have only limit breathability owing to the residual cell membranes.

Another problem with thermally formed polyurethane brassiere pad is in its limited breathability as resulted from reduced porosity after thermal formation. Cheng has described a method to produce polyurethane brassiere pads with many air holes communicating with an upper and a lower surface to improve breathability in US patent No. 6,306,006, issued on Oct. 23, 2001. However, those air holes bring in negative impact on the smoothness of the resulted brassiere cup. As a result, such pad structure has only limit market acceptance.

### OBJECTIVES OF THE INVENTION

The above-discussed problems of the prior art are overcome by the present invention with which molded brassiere cup with sufficient porosity and breathability is produced. Brassiere cups made from aliphatic polyurethane foam with excellent color fastness against UV light can also be obtained.

The present invention provides an economic solution for the production of brassiere pads with improved breathability, while maintaining the smoothness of the brassiere cup.

The objective of this invention is to provide a novel method for the preparation of polyurethane foam materials suited for seamless breast pads, cups, fronts and the like for use in brassieres and other garments.

Another objective of the present invention is to provide a novel method to improve thermal dissipation in the foam and to reduce molding temperature and process time of the thermal formation procedure. The invented method helps to avoid polymer degradation under extreme hot circumstance and to protect workers from exposure to harmful hydrogen cyanide fumes resulted from such thermal degradation.

A further objective of the present invention is to provide a method to mold a brassiere cup with shorter production cycle time. With the reduced production cycle time, the production capacity of a brassiere cup molding line can be significantly increased.

A yet further objective of the present invention is to provide a process to mold brassiere cup containing thermally sensitive fabrics or polyurethane foam material made from aliphatic isocyanates. There is a need for brassiere cups to maintain their original color throughout the service period. Any polyurethane foam made from aromatic isocyanates will develop color and gradually turns yellow to dark brown. A common way to solve this problem in the conventional art is to introduce an UV stabilizer into such polyurethane foam formulations. The UV stabilizer can only slow down the yellowing for a short period of time and the foam will still turn dark during its service life. Polyurethane foams made from aliphatic isocyanates are preferred material for brassiere cup. Urethane made from aliphatic isocyanates has a less stable chemical bond strength than that of aromatic urethane polymers and the chemical bond tends to dissociate at even lower temperatures. Therefore the traditional thermal formation process cannot be used to mold polyurethane foam made from aliphatic isocyanates. With the improvement of the present invention, a method to mold polyurethane foam made from aliphatic isocyanates is thus developed.

### SUMMARY OF THE INVENTION

This invention relates to a novel method for the preparation of polyurethane foam materials suited for seamless breast pads, cups, fronts and the like for use in brassieres and other garments. This method is especially useful in the preparation of a molded seamless brassiere cup from soft polyurethane foam materials that were produced from the polymerization of aliphatic isocyanates and polyols. Such aliphatic polyurethane foam is reticulated to remove all celled membranes and sliced into sheet with a thickness greater than the thicker wall of the finished brassiere cup. The molded seamless brassiere cups have a thicker wall at the outer or apex portion than at the peripheral portion thereof. The sliced aliphatic polyurethane foam sheet is then pressed between mold parts of a female mold part and a male mold part. The mold parts are closed and pressed by hydraulic press. The aliphatic polyurethane foam material is therefore molded into the exact shape of mold cavity. The molded aliphatic polyurethane foam material can be used as seamless breast pads, cups, fronts and the like in brassieres and other garments. The molded aliphatic polyurethane brassiere pads have superior non-yellowing properties over previous aromatic polyurethane brassiere pads and have improved body temperature dissipation due to improved breathability and porosity.

In accordance with a preferred embodiment of the present invention, aliphatic polyurethane foam is obtained from direct reacting of aliphatic isocyanate and polyol in the presence of water and catalysts. After several days of post curing, the thicker skin of the polyurethane foam bun is peeled-off. The polyurethane foam bun is then reticulated to remove all of the celled membranes within the foam to have a substantially skeletal reticulated structure.

After the reticulation, the polyurethane foam is then sliced into sheets with thickness about double that of the thickest wall of the finished brassiere cup. The sliced polyurethane foam sheet is then thermally formed between heated mold parts of a female mold part and a male mold part. Mold parts are closed and pressed by a hydraulic press. The pressure applied to the polyurethane foam material is approximately 60 pounds per square inch of mold area. The polyurethane foam material is therefore molded into the shape of the cavity of the mold parts. The molded polyurethane foam material can be used as seamless breast pads, cups, fronts and the like in brassieres and other garments. The molded seamless brassiere cups have a thicker wall at the outer or apex portion than at the peripheral portion.

### DETAILED DESCRIPTION OF THE INVENTION

While preferred embodiments will be shown and described, it will be understood that various modifications and substitutions may be made thereto without departing from the spirit and scope of the invention. Accordingly, the present invention will be described by way of illustration but not a limitation. Aliphatic polyurethane foam is used as example to illustrate the present invention; however, aromatic polyurethane foam can also be used in the present invention.

This invention relates to a novel method for the preparation of polyurethane foam materials suited for seamless breast pads, cups, fronts and the like for use in brassieres and other garments. This method is especially useful in the preparation of a molded seamless brassiere cup from soft polyurethane foam materials that were produced from the polymerization of aliphatic isocyanates and polyols. Such aliphatic polyurethane foam is reticulated to remove all cell membranes and sliced into sheet with a thickness greater than the thicker wall of the finished brassiere cup. The molded seamless brassiere cups have a thicker wall at the outer or apex portion than at the peripheral portion thereof. The sliced aliphatic polyurethane foam sheet is then pressed between mold parts of a female mold part and a male mold part. Mold parts are closed and pressed by hydraulic press. The aliphatic polyurethane foam material is therefore molded into the exact shape of mold cavity. The molded aliphatic polyurethane foam material can be used as seamless breast pads, cups, fronts and the like in brassieres and other garments. The molded aliphatic polyurethane brassiere pads have superior non-yellowing properties over previous aromatic polyurethane brassiere pads and have improved body temperature dissipation due to the improved breathability and porosity.

Polyurethane foams are typically produced using formulations comprising (1) polyol, (2) water, (3) crosslinking agent, or chain extending agent, (4) silicone-based foam stabilizer, (5) amine and organic metallic catalyst, (6) isocyanate with multiple functional group, and (7) various other additives such as auxiliary blowing agents, fillers and flame retardant agents. Examples of applicable materials for the above-said components are well known to those skilled in the art. Detailed description thereof is thus omitted.

In the preparation of commercial polyurethane foams, the trade-offs of two features, gelling and blowing, in the process are considered important. Gelling denotes to the reaction among isocyanates, polyol and crosslinking agents, in the production of the urethane polymer. Blowing denotes to the reaction between isocyanate and water whereby carbon dioxide is generated. In case the blowing reaction is going too fast, or gelling reaction too slow, the resulted foam collapses. On the other hand, when the blowing reaction is going too slow, or the gelling reaction too fast, the foam will have a capsulate cell structure wherein almost all the cells are filled with hot gas heated by reaction exothermal. The foam so generated will shrink after curing when the foam cools down.

In order to produce commercial flexible polyurethane foam with good quality and adequate porosity, the balance of gelling and blowing reactions during the production process shall be controlled by adjusting the amine and organic metallic catalyst contains in the reaction composition.. Porosity, or openness, of flexible polyurethane foam may be illustrated by airflow. Airflow is the volume of air that passes through a foam specimen of 1.0 inch thickness where a standard pressure difference is applied to both sides of the foam specimen, and is reported in the unit of cfm, which stands for "cubic foot per minute". A detail test method is described in ASTM D3574 and is taken for reference in this invention.

Commercial flexible polyurethane foams usually have the airflow value from 0.5 to 4.0 cfm. For foams with lower airflow values, there is a risk of shrinkage, which results in waste of materials. On the other hand, foams with greater airflow values will have severe inner split, if not collapsed in total. Both will result in production problem and waste of material.

The cell size of the foam is illustrated in the unit of ppi, which stands for "pore per inch". Commercial flexible polyurethane foams usually have a cell size from 20 to 100 ppi, while state-of-the-art foaming apparatus may produce polyurethane foam with a cell size from 3 to 140 ppi.

In the present invention, foams with different cell size and porosity are evaluated, in order to produce a thermally formed polyurethane foam brassiere pad with improved breathability. It is surprisingly found that reticulation of polyurethane foam prior to thermal formation of brassiere pad improves breathability significantly. Although similar trends can be found regardless of the foam cell size, for foams with greater cell size, hence less ppi value, the improvement is more significant.

The present invention provides an ideal procedure for the production of brassiere pad made from aliphatic isocyanate. Aliphatic polyurethane foam produced from aliphatic isocyanates usually has extremely close structure, owing to the lower reactivity of such aliphatic isocyanate. Aliphatic polyurethane foam usually needs to be crashed after its foaming procedure in order to prevent sieve shrinkage. It is a very troublesome procedure, since the crashing can only be conducted while the foam slab has enough strength. Crashing can not be proceeded right after the foaming, when the foam slab is still under cure and has weak cell structure, which will be destroyed in the crashing, and sticky skin, which makes the crashing difficult. The commercial crashed foam usually has an airflow value of above 0.5 cfm. Although this value is considered low, it is sufficient to prevent the foam from shrinkage.

It is found that the residual cell membranes in polyurethane foam, either aliphatic or aromatic, can result in significant reduction of foam porosity after the thermal formation of the polyurethane foam. It is easily understood that the cell membrane residuals will be flattened and contain most of those tiny air channels within the thermal formed polyurethane foam, and will result at significant drop in the breathability of the foam after the thermal formation.

The polyurethane foam so prepared is then subject to reticulation procedure. It is surprisingly found that the reticulation procedure prior to thermal formation, as used in this invention, can improve the heat dissipation within the foam material during the thermal formation procedure. As a result, the foam material can be molded, or thermally formed, with lower molding temperature and/or shorter molding time. This is an important feature of the present invention, since it helps to reduce the cycle time and improve the productivity.

Several methods to produce the reticulated foam can be used. One example is the method for the reticulation of cellular material such as polyurethane foam as disclosed in US patent No. 3,708,362, issued Jan. 2, 1973 to John J. Winchcombe et al. According to the Winchcombe invention, the foam sheet is held between platens. The air in the close cells of the sheet is replaced by a combustible gaseous medium which is then ignited to cause reticulation of the foam.

There are other methods for the reticulation of polyurethane foam. For example, eat-out the cell membranes by immersing the foam into a strong caustic or acidic aqueous solution for a certain period of time. Then immerse the foam several times with cleaning water. The strong caustic or acidic solution will etch out the membranes and a certain skin on the strut. The disadvantage of such process includes the difficulty in removing all caustic/acidic residual from the finished foam. Such residual can initiate hydrolysis and degradation, within several months after the reticulation. Foam from such reticulation has only limited service life.

Another important contribution of the reduced mold temperature is the improvement of working environment. In the prior art, during the thermal formation procedure the mold parts are heated to 350 - 450°F. Pressure applied to the polyurethane foam material is approximately 60 pounds per square inch of the mold area and heat applied to the polyurethane foam material is approximately 400°F, with the heat and the pressure being applied simultaneously for approximately sixty seconds. Actual process cycle time depends on the thickness of the polyurethane foam sheet. Owing to the poor thermal conductivity and porosity of the conventional polyurethane foam material, a thicker foam sheet usually requires an even longer process cycle time, so to allow sufficient cell strut deformation to take place in the center part of the polyurethane foam material. A significant problem in the traditional process is the dissociation of the biuret, urea and urethane bonding in the polyurethane foam material. Prolonged thermal formation cycle time for thicker polyurethane foam material usually results in a severe dissociation problem, especially at the surface portion of the polyurethane foam sheet material. These chemical bonds undergo thermal dissociation within the temperature range of 212 - 395°F. Toxic hydrogen cyanide fumes can be generated from such chemical bond dissociation. The reticulated polyurethane foam of this invention can thus improve the thermal formation due to its improved heat dissipation; hence reduces the temperature requirement of the molding condition. Toxic hydrogen cyanide fume emission is thus reduced.

The lower molding temperature is more important in the thermal formation of the aliphatic polyurethane foam. Urethane made from aliphatic isocyanates has less stable chemical bond strength than that of aromatic urethane polymer and tends to dissociate at even lower temperature. Therefore the traditional thermal formation process cannot be used in mold polyurethane foam made from aliphatic isocyanates. With the improvement from the present invention, a novel method to mold polyurethane foam made from aliphatic isocyanates has been developed.

The following examples, while not required to complete the disclosure of the present invention, are present for purposes of illustration.

### Examples 1 to 4

Foams 1 to 4, as described in Table I: Foams produced according to this invention, below, are prepared. Specimens of 3 inches in thickness and 10 inches X 10 inches in width and length were rolled and placed in a 3 liter autoclave reactor in separate experiments. In every experiment, the content in the autoclave was vacuumed to about 1 torr for 5 minutes, and then stop the vacuum and inject oxygen into the autoclave to about 250 torr. After the oxygen injection, hydrogen is then injected till the inner pressure reaches about 650 torr. The explosive gaseous content is then ignited with a spark device placed inside the autoclave. After the procedure, foam specimen was checked. Repeat the procedure until all the celled membranes are completely burn-away. Foam specimen from each experiment was named as Foam 5 to 8 accordingly, as shown in Table I. Resulted Foams 5 to 8 were then immersed in distilled methylene chloride to remove possible dissociation products from the reticulation. Foam specimens were dried in an oven of 50 degree Celsius for 20 minutes and then cooled down for further testing.

Airflow value of polyurethane foam is measured according to ASTM D-3574. An airflow meter built by Amcor (TX, USA) is used in the test. Airflow value is reported in cfm unit. Foam density is measured according to ASTM D-3574, and reported in kg/m3 unit.

**TABLE I: Foams produced according to this invention**

| Foam number | Description |
|---|---|
| Foam 1 | Aromatic polyurethane foam produced by Sunrise-Suceed Foam Co., Taiwan; base on TDI T-80 and polypropylene oxide triol of 1000 equivalent weight, with foam density of 25 kg/m3, cell size of 50 ppi and airflow value of 2.6 cfm. |
| Foam 2 | Aromatic coarse-cell polyurethane foam provided by Foamex Company (MI, USA), based on TDI T-80 and polyether triol, with foam density of 31 kg/m3, cell size of 10 ppi and airflow value of 5.2 cfm. No reticulation is applied. |
| Foam 3 | Aliphatic polyurethane foam made by Sunrise-Suceed Foam Co., Taiwan, a reaction product of isophorone diisocyanate and polyalkylene oxide, catalyzed by 1,8-diazabicyclo (5,4,0) undecene 7 and organic metallic catalyst, resulted in foam density of 32 kg/m3, cell size of 80 ppi and airflow value of 0.27 cfm. |
| Foam 4 | Aliphatic polyurethane foam made by Sunrise-Suceed Foam Co., Taiwan, a reaction product from reacting prepolymer of 1,6 hexane diisocyanate and polytetramethylene ether glycol, containing 18.4 weight % free NCO and water-glycol mixture. Catalyzed by lead octoate and 1,8-diazabicyclo (5,4,0) undecene 7, resulted in foam density of 45 kg/m3, cell size of 30 ppi and airflow value of 0.12 cfm. |
| Foam 5 | Reticulated version of Foam 1. Cell membrane is completely removed, with foam density of 23 kg/m3 and airflow value of 4.9 cfm. |
| Foam 6 | Reticulated version of Foam 2. Cell membrane is completely removed, with foam density of 28 kg/m3 and airflow value of 6.3 cfm. |
| Foam 7 | Reticulated version of Foam 3. Cell membrane is completely removed, with foam density of 31 kg/m3 and airflow value of 3.9 cfm. |
| Foam 8 | Reticulated version of Foam 4. Cell membrane is completely removed, with foam density of 43 kg/m3 and airflow value of 6.1 cfm. |

### Examples 5 to 12

Foams 1 to 8 were placed between aluminum plates, which were already heated to desire temperature, and pressed with hydraulic cylinder. The foams were thermally formed to desired thickness (Foams 9-16).

Mold parts equipped with built-in electric heaters are installed on a hydraulic press device built by Shen-Lin Industries Co. Ltd., Hong Kong. The device is capable of providing pressure of approximately 60psi on the mold area. Mold surface temperature is measure and recorded by using a "K" type thermo-coupler and a digital thermal recorder made by Shimatsu, Japan. A foam sheet of 3 inches thickness is thermally formed by a pair of aluminum plates, which was preheated by build-in electrical heater plate to 180 degree Celsius, for 100 seconds. The gap between these two mold parts is 1 inch. Final thickness of resulted foam is measured after 30 minutes while the foam is cooled down. Molding condition and final foam thickness were recorded.

**Table II: Molding conditions of Foams 9-16**

| Foam number | Mold temperature (upper/lower, in □) | Molding pressure (psi) | Duration (sec) | Final foam thickness (inch) |
|---|---|---|---|---|
| Foam 9 | 194/192 | 58 | 90 | 1 and 1/32 |
| Foam 10 | 196/ 189 | 61 | 90 | 1 and 1/16 |
| Foam 11 | 175/179 | 57 | 90 | 1 |
| Foam 12 | 179/181 | 58 | 90 | 1 |
| Foam 13 | 197/ 196 | 61 | 95 | 1 |
| Foam 14 | 196/194 | 57 | 95 | 1 and 1/32 |
| Foam 15 | 180/177 | 62 | 80 | 1 |
| Foam 16 | 182/179 | 57 | 80 | 1 and 1/32 |

Process advantage from reticulation pretreatment is illustrated from the analysis of these experiment results.

### Examples 13 to 20

Breathability of the thermally formed foam specimens 9 to 16 was measured, according to the procedures described below. Foam specimens were placed on the top of the beaker and then sealed in the humid controlled jar. The whole assembly was stored in an oven of 38 degree Celsius in temperature in order to ensure temperature control. The weight of the beaker assembly was measured at the end of every hour, for continuously 24 hours.

Water-vapor permeability is measured to illustrate the breathability of the produced polyurethane foam. Thermally formed polyurethane foam materials are tested according to ISO 1663. A desiccant, calcium chloride, is placed in the bottom of a glass beaker. The foam specimen is sealed into the top of a beaker using a circular template to ensure that a reproducible area of the foam surface is exposed to the controlled humidity, which is set at 38 degree Celsius under 88.5% humidity. The assembly is exposed to the controlled atmosphere for a successive period of 24 hours and weighted between each exposure until the rate of change becomes approximately constant. When the rate of increase in weight becomes constant, the rate of water vapor permeation through unit area of the specimen in unit time is recorded as indication of breathability.

The results are shown in the following Table III.

**Table III: Breathability of thermally formed foam specimens of this invention**

| Foam number | Time interval for constant weight increase, * (hr) | Constant weight increase, ** (gram/hr) |
|---|---|---|
| Foam 9 | 4 | 1.46 |
| Foam 10 | 3 | 2.44 |
| Foam 11 | 7 | 0.48 |
| Foam 12 | 6 | 0.67 |
| Foam 13 | 3 | 2.39 |
| Foam 14 | 1 | 4.51 |
| Foam 15 | 3 | 2.13 |
| Foam 16 | 2 | 3.78 |

| | | |
|---|---|---|
| * : If the variation of the increase for a certain time period is less than 5%, it is recorded as reaching the constant weight increase. ** : Constant weight increase is calculated using 5 continuous intervals. The average increase is recorded. | | |

From this Table III it is clearly demonstrated that the reticulation treatment of this invention can significantly improve the breathability of the thermal formed polyurethane foam materials.

This invention is especially useful in the preparation of breast pads, cups, fronts and the like for use in brassieres and other garments. However, other products with the requirements of resilience and shape stability may be produced according to the method and the products of this invention. The scope of this invention may only be defined and limited by the following claims.

## Claims

1. A method of preparing molded polyurethane foam material, comprising the steps of:
a) preparing a polyurethane foam;
b) reticulating said polyurethane foam to substantially remove cell membranes from said polyurethane foam;
c) placing said reticulated polyurethane foam between preheated mold parts;
d) applying a pressure to close said mold parts to form a compressed polyurethane foam in cavity formed by said mold parts;
e) deforming said compressed polyurethane foam into a configuration defined by said cavity between said mold parts; and
f) opening said mold parts and removing said deformed polyurethane foam from said mold parts.

2. The method of claim 1, wherein said polyurethane foam comprises a reaction product of aliphatic isocyanate and polyols, in the present of blowing agent and catalysts.

3. The method of claim 1, wherein said polyurethane foam comprises a reaction product of aromatic isocyanate and polyols, in the present of blowing agent and catalysts.

4. The method of claim 2, wherein said aliphatic isocyanate is 1,6-hexane diisocyanate.

5. The method of claim 2, wherein said aliphatic isocyanate is isophorone diisocyanate.

6. The method of claim 1, wherein said polyurethane foam has a thickness greater than the thicker wall of the finished deformed polyurethane foam.

7. The method of claim 6, wherein said polyurethane foam has a thickness of about twice that of the thicker wall of the finished deformed polyurethane foam.

8. The method of claim 1, wherein said polyurethane foam is a polyurethane foam sheet obtained by slicing from a polyurethane foam block.

9. The method of claim 1, wherein said polyurethane foam contains substantially reticulated structure in the polyurethane matrix after said reticulation.

10. The method of claim 1, further comprising a step of applying a fabric laminate on said polyurethane foam before placing said polyurethane foam between said mold parts.

11. The method of claim 1, wherein pressure to close said mold parts and to compress said polyurethane foam is supplied by a hydraulic pressing mechanism.

12. The method of claim 1, wherein pressure to close said mold parts and to compress said polyurethane foam is about 30 to 90 pounds per square inch of mold area.

13. The method of claim 1, wherein thermal formation of said compressed polyurethane foam continues for about 45 to 100 seconds.

14. The method of claim 1, wherein said mold parts are preheated to about 150 to 210 degree Celsius.

15. The method of claim 1, wherein said deformed polyurethane foam has cell size from 3 to 120 ppi.

16. The method of claim 15, wherein said deformed polyurethane foam has cell size from 5 to 70 ppi.

17. A molded polyurethane foam material prepared according to the steps of:
a) preparing a polyurethane foam;
b) reticulating said polyurethane foam to substantially remove cell membranes within said polyurethane foam;
c) placing said reticulated polyurethane foam between preheated mold parts;
d) applying a pressure to close said mold parts to form a compressed polyurethane foam in cavity formed by said mold parts;
e) deforming said compressed polyurethane foam into a configuration defined by said cavity between said mold parts; and
f) opening said mold parts and removing said deformed polyurethane foam from said mold parts.

18. The molded polyurethane foam material of claim 17, wherein said polyurethane foam comprises a reaction product of aliphatic isocyanate and polyols, in the present of blowing agent and catalysts.

19. The molded polyurethane foam material of claim 17, wherein said polyurethane foam comprises a reaction product of aromatic isocyanate and polyols, in the present of blowing agent and catalysts.

20. The molded polyurethane foam material of claim 17, wherein said aliphatic isocyanate is 1,6-hexane diisocyanate.

21. The molded polyurethane foam material of claim 18, wherein said aliphatic isocyanate is isophorone diisocyanate.

22. The molded polyurethane foam material of claim 17, wherein said polyurethane foam has a thickness greater than the thicker wall of the finished deformed polyurethane foam.

23. The molded polyurethane foam material of claim 22, wherein said polyurethane foam has a thickness of about twice that of the thicker wall of the finished deformed polyurethane foam.

24. The molded polyurethane foam material of claim 17, wherein said polyurethane foam is a polyurethane foam sheet obtained by slicing from a polyurethane foam block.

25. The molded polyurethane foam material of claim 17, wherein said polyurethane foam contains substantially reticulated structure in the polyurethane matrix after said reticulation.

26. The molded polyurethane foam material of claim 17, further comprising a step of applying a fabric laminate on said polyurethane foam before placing said polyurethane foam between said mold parts.

27. The molded polyurethane foam material of claim 17, wherein pressure to close said mold parts and to compress said polyurethane foam is supplied by a hydraulic pressing mechanism.

28. The molded polyurethane foam material of claim 17, wherein pressure to close said mold parts and to compress said polyurethane foam is about 30 to 90 pounds per square inch of mold area.

29. The molded polyurethane foam material of claim 17, wherein thermal formation of said compressed polyurethane foam continues for about 45 to 100 seconds.

30. The molded polyurethane foam material of claim 17, wherein said mold parts are preheated to about 150 to 210 degree Celsius.

31. The molded polyurethane foam material of claim 17, wherein said deformed polyurethane foam has cell size from 3 to 120 ppi.

32. The molded polyurethane foam material of claim 31, wherein said deformed polyurethane foam has cell size from 5 to 70 ppi.

33. The method of claim 31, wherein said deformed polyurethane foam has cell size from 3 to 40 ppi.

34. The method of claim 33, wherein said molded polyurethane foam is a brassiere pad.
